# EUROPÄISCHE PATENTSCHRIFT

(11) **EP 4 197 308 B1**
(45) Veröffentlichungstag und Bekanntmachung des Hinweises auf die Patenterteilung: **07.05.2025**
(21) Anmeldenummer: 22213503.0
(22) Anmeldetag: 14.12.2022
(51) Int. Cl.: A01D 34/04, A01D 34/125, H04N 23/00, A01B 69/00, B60R 1/24

(54) **HÄCKSELAUSRÜSTUNG SOWIE ARBEITSZUG MIT HÄCKSELAUSRÜSTUNG**
CHOPPER EQUIPMENT AND WORK TRAIN WITH CHOPPER EQUIPMENT
BROYEUR AUXILIAIRE ET TRAIN DE TRAVAIL DOTÉ D'UN BROYEUR AUXILIAIRE

(30) Priorität: 14.12.2021 DE 102021133033
(43) Veröffentlichungstag der Anmeldung: 21.06.2023
(73) Patentinhaber: Maschinenfabrik Bernard Krone GmbH & Co. KG, 48480 Spelle (DE)
(72) Erfinder: Kreyenhagen, Michael, 49163 Bohmte (DE); Mösker, Markus, 48480 Lünne (DE); Weiss, Peter, 48488 Emsbüren (DE); Horstmann, Josef, 49479 Ibbenbüren (DE)

(56) Entgegenhaltungen:
- EP-A1- 3 165 406
- EP-A1- 4 000 375
- DEUTZ-FAHR (OFFICIAL): "DEUTZ-FAHR Driver Extended Eyes", 9 November 2015 (2015-11-09), XP093035416, Retrieved from the Internet <URL:https://www.youtube.com/watch?v=CqCLS1reawM> [retrieved on 20230328]
- ANONYMOUS: "Agritechnica 2015: Deutz-Fahr Driver Extended Eyes System | Successful Farming", 18 November 2015 (2015-11-18), XP093035426, Retrieved from the Internet <URL:https://www.agriculture.com/video/agritechnica-2015-deutz-fahr-driver-extended-eyes-system> [retrieved on 20230328]

## Beschreibung

Die vorliegende Erfindung betrifft eine Häckselausrüstung nach dem Oberbegriff von Anspruch 1, sowie einen Arbeitszug mit einer solchen Häckselausrüstung.

Feldhäcksler werden in der Landwirtschaft zur Aufnahme, Verarbeitung und Verladung von Erntegut wie Gras, Heu, Mais oder dergleichen verwendet. Das Erntegut wird zunächst mit einem Erntevorsatz erfasst, der z.B. im Fall von Gras oder Heu das Erntegut vom Boden aufnehmen oder z.B. im Fall von Mais das Erntegut aus dem Bestand ernten kann. Der Erntevorsatz, welcher in der Regel auswechselbar ist, führt das Erntegut zu einer Einzugsvorrichtung bzw. Vorpressvorrichtung, die das Erntegut wiederum einer Häckselvorrichtung zuführt und dabei zusammenpresst, um den Häckselvorgang zu erleichtern. Die Häckselvorrichtung ist die wesentlichste Komponente des Feldhäckslers und kann z.B. eine drehbar angetriebene Häckseltrommel aufweisen, an welcher ein Zerkleinern bzw. Schneiden des Ernteguts erfolgt. Der Häckselvorrichtung kann optional ein Aufbereiter nachgeordnet sein, insbesondere ein sog. Corncracker, der Maiskörner aufquetscht. Im Weitern gelangt das Erntegut zu einem Nachbeschleuniger, der das Erntegut auf eine wesentlich höhere Geschwindigkeit beschleunigt, so dass dieses durch eine Auswurfvorrichtung mit einstellbarem Auswurfbogen ausgeworfen und z.B. auf ein Begleitfahrzeug übergeladen werden kann. Mit dem Feldhäcksler aufbereiteter Mais kann z.B. zu Silage verarbeitet werden.

Neben selbstfahrenden Feldhäckslern werden auch Anbauhäcksler eingesetzt, die über keinen eigenen Fahrantrieb und ggf. kein eigenes Fahrwerk verfügen. Diese werden an einen Schlepper (z.B. Traktor) angebaut bzw. angehängt. Neben Anbauhäckslern, die seitlich des Schleppers geführt werden, sind auch Anbauhäcksler bekannt, die entweder vorder- oder rückseitig an den Schlepper anbaubar sind, z.B. an ein Front- oder Heckhubwerk des Schleppers. Im letzteren Fall kann der Schlepper in der Regel eine größere Last tragen. Dabei wird der Schlepper während des Einsatzes rückwärts gefahren, wozu entweder die gesamte Fahrerkabine oder zumindest der Fahrersitz und die Bedienelemente um 180° gedreht werden können, um dem Fahrer Sicht in Fahrtrichtung zu ermöglichen. Der Anbauhäcksler kann mit Erntevorsätzen betrieben werden, die auch für selbstfahrende Feldhäcksler geeignet sind.

Im Unterschied zu selbstfahrenden Feldhäckslern, bei denen der Auswurfbogen typischerweise hinter der Fahrerkabine und somit außerhalb des Blickfelds des Fahrers angeordnet ist, ist bei einem front- oder heckseitig angebauten Häcksler der Auswurfbogen zwangsläufig im Blickfeld des Fahrers. Aus konstruktiven Gründen ist die Auswurfvorrichtung sogar typischerweise zentral vor dem Fahrer angeordnet und versperrt die Sicht auf Teile der Umgebung sowie Teile des Anbauhäckslers selbst. Namentlich ist oftmals die Sicht auf den Einzugsrahmen versperrt, in welchen das Erntegut eingezogen wird, so dass der Fahrer keine Möglichkeit hat, den Gutfluss optisch zu überwachen. Auch ist es schwierig zu beurteilen, ob der Anbauhäcksler richtig zu den Reihen des Bestands ausgerichtet ist oder, im Fall von Grasernte, zu einem auf dem Feld liegenden Grasschwad. Letzterer ist u.U. so schmal, dass er durch die Auswurfvorrichtung völlig verdeckt wird.

Eine Häckselausrüstung ist z.B. aus EP 4 000 375 A1 und ein Anbaugerät mit Kamera z.B. aus EP 3 165 406 A1 bekannt.

Der Erfindung liegt daher die Aufgabe zugrunde, dem Fahrer eines Schleppers beim Einsatz eines Anbauhäckslers eine verbesserte Orientierung zu ermöglichen.

Dafür wird ein Arbeitszug geschaffen mit einem Schlepper, aufweisend eine Fahrerstand, und einem Anbauhäcksler, der im Betriebszustand auf einer eine Fahrtrichtung definierenden Seite am Schlepper angebaut ist und der eine Auswurfvorrichtung zum Auswerfen von Erntegut aufweist, welche in angebautem Zustand in Fahrtrichtung vor dem Fahrerstand angeordnet ist, so dass sie, von einem vorgesehenen Kopfbereich eines Fahrers aus gesehen, einen Blindbereich verdeckt, wobei der Arbeitszug wenigstens eine Kamera mit einem Erfassungsbereich aufweist sowie eine Anzeigevorrichtung, die eingerichtet ist, ein Bildsignal der wenigstens einen Kamera zu empfangen und hieraus ein Bild für den Fahrer im Fahrerstand zu erzeugen.

Der Schlepper, der zumindest in einigen Ausführungsformen auch als Zugmaschine, Traktor oder dergleichen bezeichnet werden kann, ist selbstfahrend ausgebildet und kann durch einen Fahrer gesteuert werden. Der Fahrerstand bezeichnet den Bereich, der für den Aufenthalt des Fahrers ausgelegt ist und der den Fahrersitz aufweist sowie die Bedienelemente, mit welchen der Fahrer den Schlepper bedient. Typischerweise ist der Fahrerstand als ganz oder überwiegend geschlossene Fahrerkabine ausgebildet, was allerdings nicht erfindungswesentlich ist. Durch die Anordnung des Fahrersitzes definiert der Fahrerstand implizit einen Kopfbereich für den Fahrer, also einen Bereich, in dem der Kopf des Fahrers bei normaler Sitzhaltung angeordnet ist.

Der Anbauhäcksler ist für den Erntebetrieb an den Schlepper angebaut, wobei der Begriff "anbauen" nicht einschränkend auszulegen ist und allgemein die bestimmungsgemäße Verbindung des Anbauhäckslers mit dem Schlepper bezeichnet. Er wird typischerweise an ein Hubwerk des Schleppers angebaut, entweder front- oder heckseitig. Diejenige Seite, an der der Anbauhäcksler angeordnet ist, definiert implizit die Fahrtrichtung während des Erntevorgangs. D.h. wenn der Anbauhäcksler heckseitig angeordnet ist, weist in diesem Sinne die Fahrtrichtung nach hinten. Wenigsten Fahrersitz und Bedienelemente innerhalb des Fahrerstands sind für eine derartige Rückwärtsfahrt um 180° schwenkbar, u.U. kann auch der gesamte Fahrerstand bzw. die gesamte Fahrerkabine schwenkbar sein.

Der Anbauhäcksler weist eine Auswurfvorrichtung auf, durch die Erntegut ausgeworfen wird. Dieser Auswurfvorrichtung sind verschiedene Komponenten des Anbauhäckslers vorgeordnet, die zu Aufnehmen, Fördern und/oder Zerkleinern des Ernteguts dienen. Das Erntegut wird normalerweise durch Erntevorsatz aufgenommen oder geerntet, z.B. einen Maiserntevorsatz oder eine Pick-up. Ein solcher Erntevorsatz wird hier und im Folgenden als Teil des Feldhäckslers betrachtet, auch wenn er in vielen Fällen modular austauschbar ist. Der Erntevorsatz ist einer Einzugsvorrichtung vorgeschaltet, die das Erntegut übernimmt und es durch einen Einzugskanal in Richtung auf die Häckselvorrichtung fördert. Neben dem Zuführen des Ernteguts zur Häckselvorrichtung dient die Einzugsvorrichtung in der Regel auch zum Vorpressen des Ernteguts, wozu eine Presskraft ausgeübt wird, während das Erntegut den Einzugskanal durchläuft. Die Häckselvorrichtung selbst dient zum Zerkleinern bzw. Schneiden des Ernteguts.

Von der Häckselvorrichtung gelangt das Erntegut (optional über einen Aufbereiter, insbesondere einen Corncracker) zu einem Nachbeschleuniger, der das Erntegut derart beschleunigt, dass dieses durch die Auswurfvorrichtung ausgeworfen werden kann. Die Auswurfvorrichtung überragt in aller Regel in vertikaler Richtung die restlichen Komponenten des Anbauhäckslers. Sie ist in angebautem Zustand in Fahrtrichtung vor dem Fahrerstand angeordnet ist, so dass sie, vom Kopfbereich eines Fahrers aus gesehen, einen Blindbereich verdeckt. D.h. gewisser Bereich, welcher hier als Blindbereich bezeichnet wird, ist vom Kopfbereich aus gesehen durch die Auswurfvorrichtung verdeckt. Dementsprechend kann der Fahrer den Blindbereich normalerweise nicht einsehen. Der Blindbereich weist im Allgemeinen einen Teil der Umgebung des Arbeitszugs auf sowie einen Teil des Arbeitszugs selbst, insbesondere einen Teil des Anbauhäckslers (einschließlich des Erntevorsatzes).

Der Arbeitszug weist wenigstens eine Kamera mit einem Erfassungsbereich auf sowie eine Anzeigevorrichtung, die eingerichtet ist, ein Bildsignal der wenigstens einen Kamera zu empfangen und hieraus ein Bild für den Fahrer im Fahrerstand zu erzeugen. Der Erfassungsbereich der jeweiligen Kamera ist der Bereich, den die Kamera erfassen kann und von dem sie ein Bildsignal liefern kann. Der Begriff "Bildsignal" bezieht sich sowohl auf analoge als auch insbesondere auf digitale Signale, wobei man in letzterem Fall auch von "Bilddaten" sprechen kann. Das Bildsignal der wenigstens eine Kamera kann von einer Anzeigevorrichtung empfangen werden, die daraus ein Bild erzeugt, welches der Fahrer im Fahrerstand sehen kann. D.h., das Bild ist so erzeugbar, dass es vom Fahrer im Fahrerstand wahrnehmbar ist. In aller Regel ist die Anzeigevorrichtung entweder fest im Fahrerstand angeordnet, wobei nicht streng zwischen "im" und "am" Fahrerstand unterschieden wird, oder sie ist z.B. als mobile Einheit derart ausgebildet, dass sie im Fahrerstand angeordnet werden kann. Wie nachfolgend noch erläutert wird, kann das Bild zusammenhängend ausgebildet oder aus nicht-zusammenhängenden Teilbildern zusammengesetzt sein.

Erfindungsgemäß schließt der wenigstens eine Erfassungsbereich der wenigstens einen Kamera den Blindbereich wenigstens teilweise ein und weist dabei einen Nahbereich mit wenigstens einem Element des Arbeitszugs auf sowie einen wenigstens teilweise in Fahrtrichtung weiter entfernten Fernbereich. D.h. die wenigstens eine Kamera erfasst den Blindbereich ganz oder teilweise, so dass dieser wenigstens zum Teil in dem Bild für den Fahrer wiedergegeben werden kann. Dabei wird zum einen ein Nahbereich erfasst, der wenigstens ein Element des Arbeitszugs aufweist, insbesondere ein Element des Anbauhäckslers. Durch die Sichtbarkeit des genannten Elements hat der Fahrer einen Bezugspunkt, mit dem er Teile der Umgebung innerhalb des Bildes in Relation setzen kann. Zusätzlich wird ein Fernbereich erfasst, der wenigstens teilweise in Fahrtrichtung weiter vom Arbeitszug entfernt ist als der Nahbereich, wodurch der Fahrer zumindest einen gewissen Teil der vor ihm liegenden Fahrstrecke sehen kann. Sowohl der Nahbereich als auch der Fernbereich weisen normalerweise eine Überschneidung mit dem Blindbereich auf, können aber auch Teilbereiche außerhalb des Blindbereichs aufweisen. Dies kann u.U. von Vorteil für den Fahrer sein, da er bestimmte außerhalb des Blindbereichs liegende Strukturen sowohl über die Anzeigevorrichtung als auch unmittelbar optisch beobachten kann.

Die Anzeigevorrichtung kann prinzipiell vollständig mobil ausgebildet sein, bspw. als Tablet oder Smartphone oder als Head-Mounted Display, welches der Fahrer am Kopf trägt. Eine andere bevorzugte Ausgestaltungen sieht vor, dass die Anzeigevorrichtung einen im Fahrerstand befestigten Bildschirm aufweist. Der Begriff "befestigt" schließt hierbei die Möglichkeit ein, dass die genaue Position des Bildschirms einstellbar ist, bspw. durch Schwenken desselben, ebenso wie die Möglichkeit, dass der Bildschirm lösbar mit der Fahrerstand verbunden ist und somit bei Nichtbenutzung des Anbauhäckslers abgenommen werden kann. Für eine ausreichende Ablesbarkeit des Bildschirms ist es vorteilhaft, wenn dieser wenigstens eine Full-HD-Auflösung aufweist, also wenigstens 1920 x 1080 Pixel. Ebenso ist eine Bilddiagonale von wenigstens 10 Zoll (25,4 cm) bevorzugt. Außerdem sollte der Bildschirm als Farbbildschirm ausgebildet sein. Es ist auch möglich, dass die Anzeigevorrichtung eine Mehrzahl von Bildschirmen aufweist, insbesondere dann, wenn mehreren Kameras die zugehörigen Bildsignale liefern.

Es ist besonders bevorzugt, dass der Bildschirm wenigstens teilweise auf einer Linie zwischen dem Kopfbereich und der Auswurfvorrichtung angeordnet ist. D. h., wenn der Kopf des Fahrers wie vorgesehen im Kopfbereich angeordnet ist, sieht er den Bildschirm vor der Auswurfvorrichtung, also in einem Bereich seines Blickfelds, das für ihn anderweitig uninteressant ist. Somit kann der Bildschirm vergleichsweise hoch angeordnet sein, in einem Bereich, in dem er bei Fehlen des Anbauhäckslers einen Teil der Umgebung verdecken würde. Dieser ist allerdings bei angebautem Anbauhäckslers Teil des Blindbereichs, d.h. er ist durch die Auswurfvorrichtung ohnehin verdeckt. Andererseits erleichtert es eine vergleichsweise hohe Anordnung des Bildschirms dem Fahrer, zwischen dem Bildschirm und den für den sichtbaren, nicht verdeckten Bereichen der Umgebung hin und her zu blicken bzw. diese gleichzeitig zu beobachten.

Von besonderer Bedeutung für den ordnungsgemäßen Betrieb eines Feldhäckslers ist ein störungsfreier Einzug von Erntegut, welches durch den Erntevorsatz aufgenommen wurde. Bspw. bei einem selbstfahrenden Feldhäcksler hat der Fahrer oftmals die Möglichkeit, dies optisch zu überwachen. D.h. er kann einen Einzugsrahmen des Feldhäckslers, in welchen Erntegut eingezogen wird, direkt beobachten. Diese Möglichkeit besteht bei einem Anbauhäcksler in der Regel nicht, da der Einzugsrahmen ganz oder teilweise im Blindbereich liegt. Vor diesem Hintergrund ist es bevorzugt, dass der Nahbereich einen Einzugsrahmen des Anbauhäckslers enthält, in welchen im Erntebetrieb Erntegut eingezogen wird. Es versteht sich, dass der Nahbereich ergänzend hierzu auch wenigstens Teile des Erntegutvorsatzes enthalten kann, der dem Einzugsrahmen in Fahrtrichtung vorgelagert ist.

Es ist bevorzugt, dass der Fernbereich einen Horizontbereich enthält. Wenngleich es in einigen Fällen ausreichend sein kann, wenn der Fahrer einem Bereich bis bspw. 20 m oder 30 m vor dem Arbeitszug sehen kann, ist es vorteilhaft, wenn der Fernbereich sich bis zum Horizont erstreckt. Dies kann allein aus psychologischer Sicht sinnvoll sein, da der Fahrer anhand der Anzeigevorrichtung die gesamte vor ihm liegende Strecke überblicken kann und nicht durch ein gewissermaßen unterhalb des Horizonts abgeschnittenes Bild verunsichert wird, zumal die Größe des nicht erfasste Bereichs unterhalb des Horizonts für den Fahrer u.U. schwer abzuschätzen ist

Um dem Fahrer eine möglichst gute Orientierung zu ermöglichen, ist es bevorzugt, dass der wenigstens eine Erfassungsbereich insgesamt einem Vertikalwinkelbereich von wenigstens 80°, bevorzugt wenigstens 90°, weiter bevorzugt wenigstens 100° entspricht. Bekannterweise lassen sich mit Bezug auf einen Beobachter auf der Erdoberfläche sämtliche Richtungen und durch einen Vertikalwinkel und einen Horizontalwinkel charakterisieren, wobei der Zenit und der Horizont um einen Vertikalwinkel von 90° auseinanderliegen. In vielen Fällen ist das im Nahbereich enthaltende Element des Arbeitszugs unterhalb sowie in horizontaler Richtung vergleichsweise dicht an der wenigstens einen Kamera angeordnet, so dass der Nahbereich sich bis zu einem Tiefenwinkel (also unterhalb des Horizonts) von typischerweise wenigstens 60° oder mehr erstreckt. Andererseits sollte sich für eine ausreichende Fernsicht der Fernbereich wenigstens bis zum Horizont oder oberhalb derselben erstrecken, entsprechend einem Höhenwinkel (also oberhalb des Horizonts) von typischerweise wenigstens 10° oder 20°. Dementsprechend ist ein Vertikalwinkelbereich von 80° in vielen Fällen als sinnvolles Minimum anzusehen. Der entsprechende Vertikalwinkelbereich kann durch eine einzige Kamera oder wenigstens zwei Kameras abgedeckt werden.

Außerdem ist es vorteilhaft, wenn der wenigstens eine Erfassungsbereich insgesamt einem Horizontalwinkelbereich von wenigstens 90°, bevorzugt wenigstens 110°, weiter bevorzugt wenigstens 130° entspricht. Zwar entspricht der Blindbereich in vielen Fällen einem kleineren Horizontalwinkelbereich, allerdings erleichtert es dem Fahrer die Orientierung, wenn er ein in horizontaler Richtung breites Sichtfeld zur Verfügung hat. Auch in diesem Fall kann der Horizontalwinkelbereich durch eine einzige Kamera oder wenigstens zwei Kameras abgedeckt werden.

Wenigstens eine Kamera kann als Nachtsichtkamera ausgebildet sein. Dies beinhaltet sämtlich Typen von Kameras, die ein Bildsignal liefern, das ein helleres bzw. kontrastreiches Bild ermöglicht als das Bild, dass der Fahrer mit bloßen Augen wahrnehmen kann. Bspw. kann die Kamera einen Restlichtverstärker aufweisen, der z.B. in Kombination mit auf dem Feld aufgestellten oder am Arbeitszug montierten Scheinwerfern die Erzeugung eines entsprechenden Bildes der Umgebung ermöglicht. Alternativ kann sie bspw. auch wenigstens teilweise Infrarotlicht empfangen, welches dann zur Bilderzeugung genutzt werden kann.

Der Arbeitszug kann wenigstens zwei Kameras aufweisen, die bezüglich einer Querachse des Arbeitszugs auf gegenüberliegenden Seiten der Auswurfvorrichtung angeordnet sind. Die Querachse des Arbeitszugs stimmt dabei mit der Querachse des Schleppers überein. Bei dieser Ausführungsform ist eine Kamera in Querrichtung auf einer Seite der Auswurfvorrichtung angeordnet, während die andere Kamera auf der gegenüberliegenden Seite angeordnet ist. Da die Auswurfvorrichtung bzw. wenigstens ein unterer Teil derselben normalerweise mittig angeordnet ist, sind bei dieser Ausführungsform die beiden Kameras normalerweise auf gegenüberliegenden Seiten einer Längsmittelebene des Schleppers angeordnet. Im Allgemeinen kann durch zwei nebeneinander angeordnete Kameras ein größerer Horizontalwinkel erfasst werden als mit einer einzelnen Kamera. Die Kameras weisen bevorzugt bezüglich der Querachse überlappende Erfassungsbereiche auf, wobei die Anzeigevorrichtung dazu eingerichtet ist, aus Bildsignalen der wenigstens zwei Kameras ein zusammenhängendes Bild zu erzeugen. Durch die Überlappung ist sichergestellt, dass kein zwischen den Erfassungsbereichen liegender "neuer Blindbereich" gegeben ist. Dabei kann der Überlappungsbereich ggf. klein sein. Er könnte aber auch größer sein, was z.B. die Möglichkeit eröffnen würde, die dreidimensionale Position von Objekten im Überlappungsbereich zu bestimmen. Dies könnte wiederum genutzt werden, um den Fahrer vor einem Hindernis zu warnen oder dergleichen. Unter Umständen wäre es möglich, die Bildsignale der beiden Kameras nach Art eines geteilten Bildschirms anzuzeigen, was für den Fahrer allerdings optisch verwirrend sein könnte. Daher ist es u.U. günstiger, wenn die Anzeigevorrichtung aus den Bildsignalen ein zusammenhängendes Bild erzeugt. Die Darstellung von Objekten im Überlappungsbereich kann in unterschiedlicher Weise erfolgen. Sofern der Querabstand der beiden Kameras erheblich ist, kann es sinnvoll sein, durch Bildverarbeitung eine Darstellung zu erzeugen, die einer Position zwischen den beiden Kameras entspricht. In jedem Fall sollte ein Übergang zwischen den Erfassungsbereich der einen Kamera und dem Erfassungsbereich der anderen Kamera für den Fahrer nicht ohne weiteres erkennbar sein.

Es ist ebenfalls möglich, dass der Arbeitszug wenigstens zwei Kameras aufweist, von denen eine einen Erfassungsbereich aufweist, der den Nahbereich enthält, und die andere einen Erfassungsbereich aufweist, der den Fernbereich enthält. Die Erfassungsbereiche der beiden Kameras können einander überlappen, sie könnten aber auch voneinander getrennt sein. Letzteres ist allerdings nicht bevorzugt, da hierdurch zwangsläufig ein Teil des Blindbereichs unerfasst bleibt. Bei einer Überlappung kann auch der Erfassungsbereich, der den Nahbereich enthält, einen Teil des Fernbereichs enthalten, und umgekehrt. Vorteilhaft gegenüber einer einzelnen Kamera ist bei zwei Kameras, dass hierdurch im Allgemeinen ein insgesamt größerer Vertikalwinkelbereich erfasst werden kann. Darüber hinaus wäre es denkbar, dass eine der Kameras optisch für den Nahbereich optimiert ist, während die andere für den Fernbereich optimiert ist. Es wäre sogar denkbar, dass bspw. die Kamera für den Fernbereich eine andere Vergrößerung aufweist als die Kamera für den Nahbereich. Im Falle überlappende Erfassungsbereiche kann wie bei den in Querrichtung beabstandeten Kameras ein zusammenhängendes Bild erzeugt werden oder die Bildsignale beider Kameras könnten nach Art eines geteilten Bildschirms separat angezeigt werden.

Gemäß einer Ausführungsform ist wenigstens eine Kamera am Anbauhäcksler angeordnet. Dies insofern vorteilhaft, als Position und Ausrichtung der Kamera optimal an den Anbauhäcksler angepasst sein können, um den Blindbereich einschließlich des Nahbereichs optimal zu erfassen. Außerdem kann eine Anbringung am Anbauhäcksler im Allgemeinen eine gute Sicht auf den Blindbereich gewährleisten, da der Anbauhäcksler (einschließlich des Erdvorsatzes) den in Fahrtrichtung vorderen Teil des Arbeitszugs bildet.

In aller Regel stellt die Auswurfvorrichtung den am höchsten aufragenden Teil des Anbauhäckslers dar und ist somit vorteilhaft für die Anbringung wenigstens einer Kamera. Erfindungsgemäß weist die Auswurfvorrichtung einen Auswurfstutzen sowie einen hiermit drehbar verbundenen, oberhalb angeordneten Auswurfbogen auf. Dabei ist es erfindungsgemäß, dass wenigstens eine Kamera am Auswurfstutzen, benachbart zum Auswurfbogen angeordnet ist. Der Auswurfstutzen bildet in der Regel den am höchsten aufragenden stationären Abschnitt des Anbauhäckslers, während der Auswurfbogen zwar höher angeordnet ist, allerdings (um eine in der Regel vertikale Drehachse) drehbar mit dem Auswurfstutzen verbunden ist. Durch die Drehbarkeit kann der ausgeworfene Erntegutstrom in unterschiedliche Richtungen gelenkt werden. Eine Anbringung einer Kamera am Auswurfbogen würde eine ständige Neueinstellung der Kamera bei jeder Drehung des Auswurfbogens erfordern. Zudem könnte der Auswurfbogen in einigen Einstellungen den Blindbereich teilweise verdecken. Insofern ist eine Anbringung am Auswurfstutzen, und zwar benachbart zum Auswurfbogen, optimal, da dies den höchsten stationären Bereich des Anbauhäckslers darstellt. Normalerweise kann die Kamera in Fahrtrichtung vor dem Auswurfstutzen angeordnet sein. Unter Umständen könnte aber auch wenigstens eine Kamera bezüglich der Querachse seitlich des Auswurfstutzens angeordnet sein.

Alternativ oder evtl. auch zusätzlich kann wenigstens eine Kamera am Schlepper angeordnet sein. Dabei ist es sinnvoll, wenn die Kamera in Richtung der Querachse gegenüber der Auswurfvorrichtung versetzt ist und somit seitlich der Auswurfvorrichtung "Sicht" auf den Blindbereich hat. Ein Vorteil der Anbringung am Schlepper ist, dass eine - drahtlose oder drahtgebundene - Übertragung eines Bildsignals vom Anbauhäcksler zum Schlepper entfällt. Insbesondere bei dieser Ausgestaltung können zwei zu unterschiedlichen Seiten versetzte Kameras vorgesehen sein, deren Erfassungsbereiche sich überlappen.

Insbesondere kann, wenn der Fahrerstand (wie üblich) als Fahrerkabine ausgebildet ist, wenigstens eine Kamera an der Fahrerkabine angeordnet sein, z.B. seitlich an der Fahrerkabine oder auf dem Dach derselben. Ein Vorteil der Anbringung an der Fahrerkabine liegt darin, dass dort im Allgemeinen eine höhere Anordnung möglich ist als z.B. am Auswurfstutzen, was z.B. die Sicht auf den Fernbereich verbessern kann. Unter Umständen kann es sinnvoll sein, dass eine vertikale Position wenigstens einer Kamera verstellbar ist. D.h. die entsprechende Kamera kann bezüglich der Hochachse des Arbeitszugs bzw. des Schleppers in unterschiedlicher Höhe angeordnet werden. Es kann eine manuelle Verstellbarkeit vorgesehen sein oder auch eine aktorische Verstellbarkeit, wobei der Fahrer über ein Bedienelement im Fahrerstand den entsprechenden Aktor ansteuern könnte. Verbunden mit der Höhenverstellbarkeit ist normalerweise eine Schwenkbarkeit bezüglich des Höhenwinkels sinnvoll, damit z.B. das im Nahbereich sichtbare Element des Arbeitszugs einerseits zur Orientierung sichtbar bleibt, andererseits aber auch nicht zu wenig von der Umgebung des Arbeitszugs erfasst wird.

Durch die Erfindung wird eine Häckselausrüstung geschaffen, mit einem Anbauhäcksler, der auf einer eine Fahrtrichtung definierenden Seite an einem Schlepper anbaubar ist und der eine Auswurfvorrichtung zum Auswerfen von Erntegut aufweist, welche in angebautem Zustand in Fahrtrichtung vor einem Fahrerstand des Schleppers angeordnet ist, so dass sie von einem vorgesehenen Kopfbereich eines Fahrers aus gesehen einen Blindbereich verdeckt, sowie mit einer Anzeigevorrichtung, die eingerichtet ist, ein Bildsignal wenigstens einer Kamera, die einen Erfassungsbereich aufweist, zu empfangen und hieraus ein Bild für den Fahrer im Fahrerstand zu erzeugen.

Erfindungsgemäß deckt in angebautem Zustand der wenigstens eine Erfassungsbereich der wenigstens einen Kamera den Blindbereich wenigstens teilweise ab und deckt dabei einen Nahbereich mit wenigstens einem Element des Arbeitszugs sowie einen wenigstens teilweise in Fahrtrichtung weiter entfernten Fernbereich ab.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematische Seitenansicht einer ersten Ausführungsform eines erfindungsgemäßen Arbeitszugs auf einem Feld;
- Fig. 2: eine Draufsicht des Arbeitszugs aus Fig.1;
- Fig. 3: eine perspektivische Darstellung einer Aussicht aus einem Fahrerstand des Arbeitszugs aus Fig.1;
- Fig. 4: eine Fig.1 entsprechende Seitenansicht einer zweiten Ausführungsform eines erfindungsgemäßen Arbeitszugs; sowie
- Fig. 5: eine Fig.2 entsprechende Draufsicht einer dritten Ausführungsform eines erfindungsgemäßen Arbeitszugs.

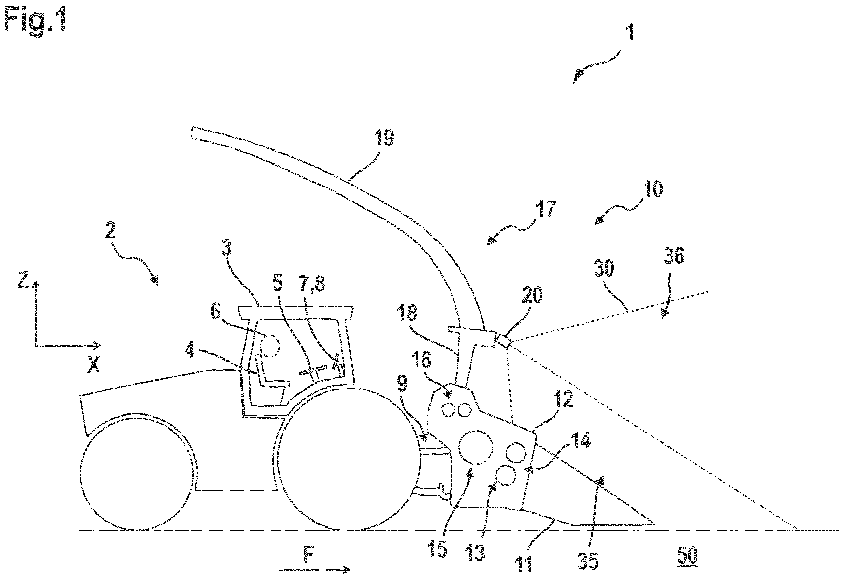

Fig. 1 zeigt eine erste Ausführungsform eines erfindungsgemäßen Arbeitszugs 1 auf einem Feld 50. Der Arbeitszug 1 weist einen Schlepper 2 auf, der von einem nicht dargestellten Fahrer in einer als Fahrerstand fungierenden Fahrerkabine 3 gesteuert wird. Zur Orientierung sind in den Figuren eine zum Heck des Schleppers 2 weisende Längsachse X, eine Querachse Y sowie eine Hochachse Z des Arbeitszugs 1 eingezeichnet. Innerhalb der Fahrerkabine 3 sind u.a. ein Fahrersitz 4, ein Lenkrad 5 sowie ein Bildschirm 8 angeordnet. Durch die Position des Fahrersitzes 4 ist ein Kopfbereich 6 des Fahrers definiert, innerhalb dessen der Kopf des Fahrers bei normaler Sitzhaltung angeordnet ist. Der Bildschirm 8 bildet eine Anzeigevorrichtung 7 oder ist zumindest ein Teil derselben. Er weist vorliegend eine Bilddiagonale von 10 Zoll (25,4 cm) auf und eine Auflösung von 1920 x 1080 Pixeln, also Full-HD. Um den Einsatz innerhalb des Schleppers 2 unbeschädigt zu überstehen, ist er bis zu einer Beschleunigung von 10 g belastbar. An ein heckseitiges Hubwerk 9 des Schleppers 2 ist ein Anbauhäcksler 10 angekoppelt. Um den Anbauhäcksler 10 sinnvoll betreiben zu können, wird der Schlepper 2 in einer zum Heck weisenden Fahrtrichtung F gefahren, also rückwärts. Um dem Fahrer eine Sicht in Fahrtrichtung F zu ermöglichen, ist entweder die Fahrerkabine 3 in ihrer Gesamtheit oder wenigstens der Fahrersitz 4 sowie Steuerelemente wie das Lenkrad 5 um 180° nach hinten geschwenkt.

Der Anbauhäcksler 10 weist einen Einzugsrahmen 12 auf, an den bezüglich der Fahrtrichtung F vorderseitig ein Erntevorsatz 11 angekoppelt ist, der je nach Bedarf ausgetauscht werden kann. In diesem Fall kann es sich bspw. um einen Maiserntevorsatz handeln. Innerhalb des Einzugsrahmens 12 ist eine Einzugsvorrichtung 13 mit einem Einzugskanal 14 angeordnet, an die sich eine Häckselvorrichtung 15 anschließt. Das in der Einzugsvorrichtung 13 vorgepresste Erntegut wird durch die Häckselvorrichtung 15 zerkleinert und gelangt im Weiteren zu einem Nachbeschleuniger 16, der es beschleunigt und durch eine Auswurfvorrichtung 17 auswirft, so dass es auf ein hier nicht dargestelltes Begleitfahrzeug übergeladen werden kann. Die Auswurfvorrichtung 17 weist einen bezüglich des Einzugsrahmens 12 stationären Auswurfstutzen 18 auf sowie einen um eine annähernd vertikale Achse drehbaren Auswurfbogen 19 auf. Am Auswurfstutzen 18, benachbart zum Auswurfbogen 19, ist eine Kamera 20 mit einem Erfassungsbereich 30 angeordnet. Der Erfassungsbereich 30 kann in einen Nahbereich 35 und einen Fernbereich 36 unterteilt werden, wobei die hier durch die strichpunktierte Linie gezeigte Unterteilung nicht eindeutig ist. In jedem Fall enthält der Nahbereich 35 wenigstens einen Teil des Erntevorsatzes 11 sowie des Einzugsrahmens 12, während der Fernbereich 36 weiter vom Arbeitszug 1 entfernt ist und sich bis zum Horizont erstreckt. Insgesamt deckt der Erfassungsbereich 30 einen Vertikalwinkel von 100° ab sowie einen Horizontalwinkel von 130°. Die Kamera 20 ist über eine drahtlose oder drahtgebundene Verbindung mit der Anzeigevorrichtung 7 gekoppelt, so dass auf dem Bildschirm 8 aus dem Bildsignal der Kamera 20 ein Bild für den Fahrer erzeugt wird.

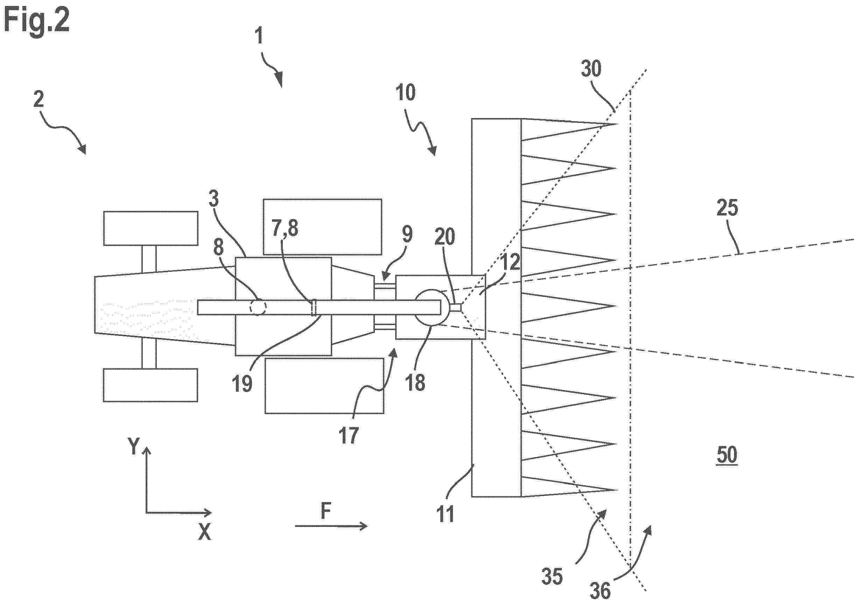

Wie insbesondere in der Draufsicht in Fig. 2 erkennbar ist, ist ein Blindbereich 25 für den Fahrer dadurch verdeckt, dass sich dieser vom Kopfbereich 6 ausgesehen jenseits der Auswurfvorrichtung 17 befindet. Allerdings ist der Blindbereich 25 überwiegend durch den Erfassungsbereich 30 abgedeckt, so dass der Fahrer die Möglichkeit erhält, auch Strukturen im Blindbereich 25 zu sehen. Dies betrifft zum einen wesentliche Teile des Feldes 50 bis zum Horizont und darüber hinaus bis zu einem Höhenwinkel von ca. 20°. Nach unten erstreckt sich der Erfassungsbereich bis zu einem Tiefenwinkel von ca. 80°. U.a. auch hierdurch ist es möglich, dass der Fahrer mittels der Kamera 20 auch einen Teil des Erntevorsatzes 11 sowie insbesondere den Einzugsrahmen 12 beobachten kann. Er kann somit auf dem Bildschirm 8 nicht nur vor ihm liegende Hindernisse oder andere Strukturen des Feldes 50 frühzeitig erkennen, sondern hat auch unmittelbar die Möglichkeit, die Position des Anbauhäckslers 10 relativ zu diesen Strukturen einzuschätzen. Außerdem kann er den Erntegutfluss zum Einzugsrahmen, welcher in den Einzugskanal 14 führt, direkt beobachten und eventuelle Störungen erkennen.

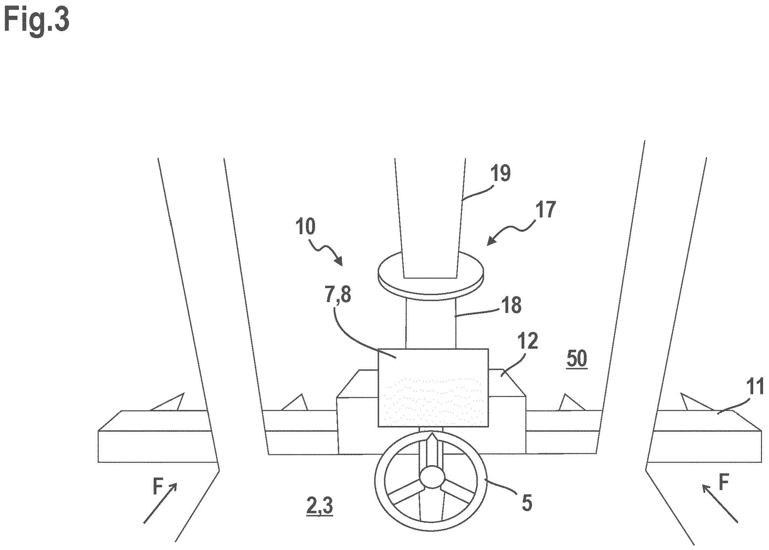

Wie insbesondere aus Fig. 2 sowie aus Fig. 3 hervorgeht, welche in vereinfachter Weise die Sicht des Fahrers aus dem Inneren der Fahrerkabine 3 darstellt, ist der Bildschirm 8 vom Kopfbereich 3 ausgesehen in einer Linie mit der Auswurfvorrichtung 17 angeordnet. D.h., der Bildschirm 8 befindet sich für den Fahrer in einem Bereich, in dem er ohnehin keine Sicht auf das Feld 50 hat, da dieses durch die Auswurfvorrichtung 17 verdeckt ist. Außerdem ist der Bildschirm 8 so hoch angeordnet, dass der Fahrer ihn im Blick behalten kann, während er gleichzeitig für ihn direkt sichtbare Teile des Feldes 50 beobachtet.

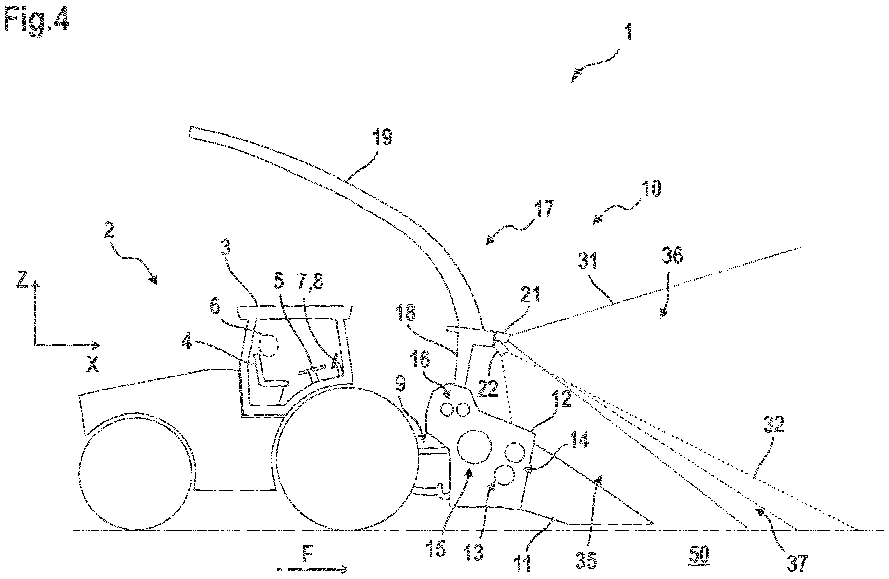

Fig. 4 zeigt eine zweite Ausführungsform eines erfindungsgemäßen Arbeitszugs 10, die weitgehend mit der ersten Ausführungsform übereinstimmt und insofern nicht nochmals erläutert wird. Allerdings sind in diesem Fall am Auswurfstutzen 18 eine obere Kamera 21 mit einem oberen Erfassungsbereich 31 sowie eine untere Kamera 22 mit einem unteren Erfassungsbereich 32 angeordnet. Der obere Erfassungsbereich 31 entspricht im Wesentlichen dem Fernbereich 36, während der untere Erfassungsbereich 32 im Wesentlichen dem Nahbereich 35 entspricht. Allerdings überschneiden sich die Erfassungsbereiche 31, 32 und bilden einen ersten Überschneidungsbereich 37. D.h., die Bildsignale beider Kameras 21, 22 liefern Informationen über diesen ersten Überschneidungsbereich 37. Es ist entweder möglich, dass die Anzeigevorrichtung 7 nach Art eines geteilten Bildschirms die Teilbilder der beiden Kameras 21, 22 übereinander anzeigt, oder das durch geeignete Bildverarbeitungsalgorithmen aus den Bildsignalen, die den Überschneidungsbereich 37 betreffen, ein Bild synthetisiert wird, durch das der Fahrer den Eindruck eines stufenlosen Übergangs vom Nahbereich 35 zum Fernbereich 36 hat.

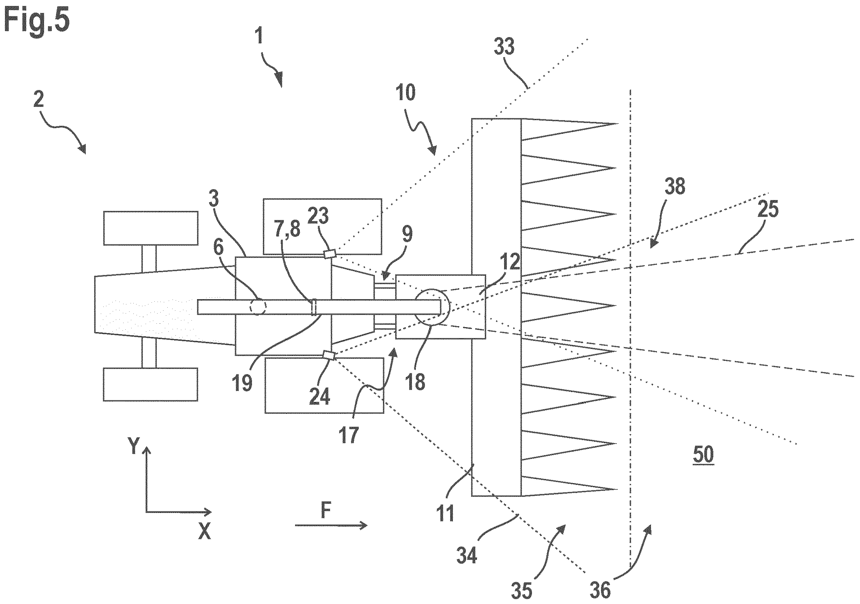

Fig. 5 zeigt eine dritte Ausführungsform eines erfindungsgemäßen Arbeitszugs 10, die wiederum weitgehend mit der ersten Ausführungsform übereinstimmt. In diesem Fall sind allerdings zwei Kameras 23, 24 am Dach der Fahrerkabine 3 befestigt. Eine (in Fahrtrichtung F gesehen) linke Kamera 23 weist einen linken Erfassungsbereich 33 auf, während eine rechte Kamera 24 einen rechten Erfassungsbereich 34 aufweist. Die beiden Erfassungsbereich 33, 34 schneiden sich in einem zweiten Überschneidungsbereich 38, der große Teile des Blindbereichs 25 enthält. Man kann sagen, dass die linke Kamera links an der Auswurfvorrichtung 17 vorbeiblickt, während die rechte Kamera 24 rechts vorbeiblickt. Insofern werden beide Kameras 23, 24 nur wenig dadurch beeinträchtigt, dass sie bezüglich der Fahrtrichtung hinter der Auswurfvorrichtung 17 angeordnet sind. Auch in diesem Fall könnten die Bildsignale der beiden Kameras 23, 24 nach Art eines geteilten Bildschirms kombiniert werden oder es könnte durch Bildverarbeitung ein sanfter Übergang erzeugt werden, so dass der Fahrer den Eindruck eines durchgehenden Bildes hat.

Jede der gezeigten Kameras 20 - 24 kann optional eine wenigstens eingeschränkte Nachtsichtfähigkeit haben, bspw. über einen Restlichtverstärker und/oder durch eine Empfindlichkeit für Infrarotlicht. Optional kann wenigstens eine Kamera 20 - 24 höhenverstellbar an der Fahrerkabine 3 bzw. am Auswurfstutzen 18 angeordnet sein, d.h. die Position der Kamera 20 - 24 entlang der Hochachse Z kann - manuell oder aktorisch - veränderbar sein.

## Patentansprüche

1. Häckselausrüstung, mit einem Anbauhäcksler (10), der auf einer eine Fahrtrichtung (F) definierenden Seite an einem Schlepper (2) anbaubar ist und der eine Auswurfvorrichtung (17) zum Auswerfen von Erntegut aufweist, welche in angebautem Zustand in Fahrtrichtung (F) vor einem Fahrerstand (3) des Schleppers (2) angeordnet ist, so dass sie, von einem vorgesehenen Kopfbereich (6) eines Fahrers aus gesehen, einen Blindbereich (25) verdeckt, sowie mit einer Anzeigevorrichtung (7), die eingerichtet ist, ein Bildsignal wenigstens einer Kamera (20-24), die einen Erfassungsbereich (30-34) aufweist, zu empfangen und hieraus ein Bild für den Fahrer im Fahrerstand (3) zu erzeugen, wobei in angebautem Zustand der wenigstens eine Erfassungsbereich (30-34) der wenigstens einen Kamera (20-24) den Blindbereich (25) wenigstens teilweise enthält und dabei einen Nahbereich (35) mit wenigstens einem Element des Anbauhäckslers (10) sowie einen wenigstens teilweise in Fahrtrichtung (F) weiter entfernten Fernbereich (36) aufweist, wodurch der Fahrer zumindest einen gewissen Teil der vor ihm liegenden Fahrstrecke sehen kann, wobei die Auswurfvorrichtung (17) einen Auswurfstutzen (18) sowie einen hiermit drehbar verbundenen, oberhalb angeordneten Auswurfbogen (19) aufweist, wobei wenigstens eine Kamera (20-24) am Auswurfstutzen (18), benachbart zum Auswurfbogen (19) angeordnet ist.

2. Arbeitszug (1) mit einem Schlepper (2), aufweisend einen Fahrerstand (3), und einer Häckselausrüstung nach Anspruch 1.

3. Arbeitszug nach Anspruch 2, **dadurch gekennzeichnet, dass** die Anzeigevorrichtung (7) einen im Fahrerstand (3) befestigten Bildschirm (8) aufweist.

4. Arbeitszug nach einem der Ansprüche 2-3, **dadurch gekennzeichnet, dass** der Bildschirm (8) wenigstens teilweise auf einer Linie zwischen dem Kopfbereich (6) und der Auswurfvorrichtung (17) angeordnet ist.

5. Arbeitszug nach einem der Ansprüche 2-4, **dadurch gekennzeichnet, dass** der Nahbereich (35) einen Einzugsrahmen des Anbauhäckslers (10) enthält, in welchen im Erntebetrieb Erntegut eingezogen wird.

6. Arbeitszug nach einem der Ansprüche 2-5, **dadurch gekennzeichnet, dass** der Fernbereich (36) einen Horizontbereich enthält.

7. Arbeitszug nach einem der Ansprüche 2-6, **dadurch gekennzeichnet, dass** der wenigstens eine Erfassungsbereich (30-34) insgesamt einem Vertikalwinkelbereich von wenigstens 80°, bevorzugt wenigstens 90°, weiter bevorzugt wenigstens 100° entspricht.

8. Arbeitszug nach einem der Ansprüche 2-7, **dadurch gekennzeichnet, dass** der wenigstens eine Erfassungsbereich (30-34) insgesamt einem Horizontalwinkelbereich von wenigstens 90°, bevorzugt wenigstens 110°, weiter bevorzugt wenigstens 130° entspricht.

9. Arbeitszug nach einem der Ansprüche 2-8, **dadurch gekennzeichnet, dass** der Arbeitszug (1) wenigstens zwei Kameras (20-24) aufweist, die bezüglich einer Querachse (Y) des Arbeitszugs (1) auf gegenüberliegenden Seiten der Auswurfvorrichtung (17) angeordnet sind und die bezüglich der Querachse (Y) überlappende Erfassungsbereiche (30-34) aufweisen, wobei die Anzeigevorrichtung (7) dazu eingerichtet ist, aus Bildsignalen der wenigstens zwei Kameras (20-24) ein zusammenhängendes Bild zu erzeugen.

10. Arbeitszug nach einem der Ansprüche 2-9, **dadurch gekennzeichnet, dass** dieser wenigstens zwei Kameras (20-24) aufweist, von denen eine einen Erfassungsbereich (30-34) aufweist, der den Nahbereich (35) enthält, und die andere einen Erfassungsbereich (30-34) aufweist, der den Fernbereich (36) enthält.

11. Arbeitszug nach einem der Ansprüche 2-10, **dadurch gekennzeichnet, dass** wenigstens eine Kamera (20-24) am Anbauhäcksler (10) angeordnet ist.

12. Arbeitszug nach einem der Ansprüche 2-11, **dadurch gekennzeichnet, dass** wenigstens eine Kamera (20-24) am Schlepper (2) angeordnet ist.

13. Arbeitszug nach einem der Ansprüche 2-12, **dadurch gekennzeichnet, dass** der Fahrerstand (3) als Fahrerkabine ausgebildet ist, wobei wenigstens eine Kamera (20-24) an der Fahrerkabine (3) angeordnet ist.

14. Arbeitszug nach einem der Ansprüche 2-13, **dadurch gekennzeichnet, dass** eine vertikale Position wenigstens einer Kamera (20-24) verstellbar ist.

## Claims

1. Chopping equipment comprising an attached chopper (10) which can be attached to a tractor (2) on a face defining a travel direction (F), and which has an ejection device (17) for ejecting harvested material, which, in the attached state, is arranged in front of a driver's platform (3) of the tractor (2) in the travel direction (F), so that it obscures a blind region (25) when viewed from an intended head region (6) of a driver, and comprising a display device (7) which is designed to receive an image signal from at least one camera (20-24) which has a detection region (30-34), and to generate an image therefrom for the driver in the driver's platform (3), wherein, in the attached state, the at least one detection region (30-34) of the at least one camera (20-24) at least partially contains the blind region (25) and has a near region (35) with at least one element of the attached chopper (10), and a far region (36) which is at least partially further away in the travel direction (F), as a result of which, the driver can see at least a certain portion of the route ahead of him, wherein the ejection device (17) has an ejection nozzle (18) and has an ejection arc (19) which is rotatably connected to and arranged above the ejection nozzle, wherein at least one camera (20-24) is arranged on the ejection nozzle (18), adjacent to the ejection arc (19).

2. Work train (1) comprising a tractor (2), which has a driver's platform (3), and chopping equipment according to claim 1.

3. Work train according to claim 2, **characterized in that** the display device (7) has a screen (8) mounted in the driver's platform (3).

4. Work train according to any of claims 2-3, **characterized in that** the screen (8) is at least partially arranged on a line between the head region (6) and the ejection device (17).

5. Work train according to any of claims 2-4, **characterized in that** the near region (35) contains a collection frame of the attached chopper (10), in which harvested material is collected during harvesting.

6. Work train according to any of claims 2-5, **characterized in that** the far region (36) contains a horizon region.

7. Work train according to any of claims 2-6, **characterized in that** the at least one detection region (30-34) corresponds overall to a vertical angle range of at least 80°, preferably at least 90°, more preferably at least 100°.

8. Work train according to any of claims 2-7, **characterized in that** the at least one detection region (30-34) corresponds overall to a horizontal angle range of at least 90°, preferably at least 110°, more preferably at least 130°.

9. Work train according to any of claims 2-8, **characterized in that** the work train (1) comprises at least two cameras (20-24) which are arranged on opposite faces of the ejection device (17) with respect to a transverse axis (Y) of the work train (1) and have overlapping detection regions (30-34) with respect to the transverse axis (Y), the display device (7) being designed to generate a coherent image from image signals of the at least two cameras (20-24).

10. Work train according to any of claims 2-9, **characterized in that** the work train comprises at least two cameras (20-24), one of which has a detection region (30-34) containing the near region (35) and the other of which has a detection region (30-34) containing the far region (36).

11. Work train according to any of claims 2-10, **characterized in that** at least one camera (20-24) is arranged on the attached chopper (10).

12. Work train according to any of claims 2-11, **characterized in that** at least one camera (20-24) is arranged on the tractor (2).

13. Work train according to any of claims 2-12, **characterized in that** the driver's platform (3) is designed as a driver's cabin, at least one camera (20-24) being arranged on the driver's cabin (3).

14. Work train according to any of claims 2-13, **characterized in that** a vertical position of at least one camera (20-24) is adjustable.

## Revendications

1. Equipement à hacheur, comprenant un hacheur (10) à accoler, qui peut, d'un côté définissant un sens (F) de déplacement, être accolé à un tracteur (2) et qui a un dispositif (17) d'éjection, pour éjecter de la récolte, lequel est, dans l'état accolé monté, dans le sens (F) de déplacement, en avant d'une position (3) du conducteur du tracteur (2) de manière à recouvrir, considéré à partir d'une partie (6) de tête prévue d'un conducteur, une partie (25) aveugle, ainsi que comprenant un dispositif (7) d'affichage, qui est agencé pour recevoir un signal d'image d'au moins un appareil de prise de vue (20-24), qui a une partie (30-34) de détection, et en produire une image pour le conducteur à la position (3) de conducteur, dans lequel, dans l'état accolé, la au moins une partie (30-34) de détection du au moins un appareil de prise de vue (20-24) contient au moins en partie la partie (25) aveugle et a ainsi une partie (35) proche ayant au moins un élément du hacheur (10) accolé ainsi qu'une autre partie (36) lointaine éloignée davantage au moins en partie dans le sens (F) de déplacement, grâce à quoi le conducteur peut voir au moins une certaine partie de la voie de déplacement devant lui, dans lequel le dispositif (17) d'éjection a une tubulure (18) d'éjection ainsi qu'un arceau (19) d'éjection, qui y est relié avec possibilité de tourner et qui est disposé au-dessus, dans lequel au moins un appareil de prise de vue (20-24) est monté sur la tubulure (18) d'éjection au voisinage de l'arceau (19) d'éjection.

2. Train (1) de travail comprenant un tracteur (2) comportant une position (3) de conducteur et un équipement à hacheur suivant la revendication 1.

3. Train de travail suivant la revendication 2, **caractérisé en ce que** le dispositif (7) d'affichage a un écran (8) fixé à la position (3) du conducteur.

4. Train de travail suivant l'une des revendications 2 à 3, **caractérisé en ce que** l'écran (8) est disposé au moins en partie sur une ligne entre la partie (6) de tête et le dispositif (17) d'éjection.

5. Train de travail suivant l'une des revendications 2 à 4, **caractérisé en ce que** la partie (35) proche contient un cadre d'entrée du hacheur (10) à accoler, dans lequel, en fonctionnement de récolte, de la récolte est entrée.

6. Train de travail suivant l'une des revendications 2 à 5, **caractérisé en ce que** la partie (36) lointaine contient une partie d'horizon.

7. Train de travail suivant l'une des revendications 2 à 6, **caractérisé en ce que** la au moins une partie (30-34) de détection correspond dans l'ensemble à un domaine angulaire vertical de moins de 80° de préférence de moins de 90°, d'une manière encore plus préférée de moins de 100°.

8. Train de travail suivant l'une des revendications 2 à 7, **caractérisé en ce que** la au moins une partie (30-34) de détection correspond dans l'ensemble à un domaine angulaire horizontal de moins de 90°, de préférence de moins de 110°, d'une manière encore plus préférée de moins de 130°.

9. Train de travail suivant l'une des revendications 2 à 8, **caractérisé en ce que** le train (1) de travail a au moins deux appareils de prise de vue (20-24), qui, par rapport à un axe (Y) transversal du train (1) de travail, sont montés sur des côtés opposés du dispositif (17) d'éjection et qui, par rapport à l'axe (Y) transversal, ont des parties (30-34) de détection à chevauchement, dans lequel le dispositif (7) d'affichage est agencé pour produire une image d'un seul tenant à partir de signaux d'images des au moins deux appareils de prise de vue (20-24).

10. Train de travail suivant l'une des revendications 2 à 9, **caractérisé en ce que** celui-ci a au moins deux appareils de prise de vue (20-24), dont l'une a une partie (30-34) de détection qui contient la partie (35) proche et l'autre une partie (30-34) de détection, qui contient la partie (36) lointaine.

11. Train de travail suivant l'une des revendications 2 à 10, **caractérisé en ce qu'**au moins un appareil de prise de vue (20-24) est monté sur le hacheur (10) à accoler.

12. Train de travail suivant l'une des revendications 2 à 11, **caractérisé en ce qu'**au moins un appareil de prise de vue (20-24) est monté sur le tracteur (2).

13. Train de travail suivant l'une des revendications 2 à 12, **caractérisé en ce que** la position (3) du conducteur est constituée sous la forme d'une cabine de conducteur, dans lequel au moins un appareil de prise de vue (20-24) est monté sur la cabine (3) de conducteur.

14. Train de travail suivant l'une des revendications 2 à 13, **caractérisé en ce qu'**une position verticale d'au moins un appareil de prise de vue (20-24) est réglable.
